# EUROPEAN PATENT APPLICATION

(11) **EP 4 836 010 A1**
(43) Date of publication of application: **04.11.2026**
(21) Application number: 26172604.6
(22) Date of filing: 15.04.2026
(51) Int. Cl.: H01M 4/525, H01M 4/36, H01M 4/131, H01M 4/1391, H01M 10/0525, H01M 4/02

(54) **POSITIVE ELECTRODE ACTIVE MATERIALS, POSITIVE ELECTRODES, AND RECHARGEABLE LITHIUM BATTERIES**

(30) Priority: 25.04.2025 KR 20250054361
(71) Applicant: SAMSUNG SDI CO., LTD., Yongin-si, Gyeonggi-do 17084 (KR)
(72) Inventor: CHOO, Sungho, 17084 Yongin-si (KR); CHANG, Donggyu, 17084 Yongin-si (KR); JANG, Jungsue, 17084 Yongin-si (KR); AN, Jisang, 17084 Yongin-si (KR); PARK, Jingyu, 17084 Yongin-si (KR); LEE, Jiho, 17084 Yongin-si (KR); RYU, Jaemin, 17084 Yongin-si (KR)
(74) Representative: Maiwald GmbH

(57) **Abstract**

Some example embodiments provide a positive electrode active material, a positive electrode including the same and a rechargeable lithium battery. The positive electrode active material includes core particles in a form of secondary particles in which a plurality of primary particles are agglomerated, including a lithium nickel-based composite oxide; and a coating layer disposed on the surface of the core particle and containing cobalt, aluminum, and yttrium

## Description

### BACKGROUND

### 1. Field

Positive electrode active materials, positive electrodes including the positive electrode active materials, and rechargeable lithium batteries are disclosed.

### 2. Description of the Related Art

Portable information device such as a cell phone, a laptop, smart phones, and the like use rechargeable lithium batteries having high energy density and easy portability as power sources. Rechargeable lithium batteries with high energy density are also used as driving power sources or power storage power sources for hybrid or electric vehicles.

Various positive electrode active materials have been used in rechargeable lithium batteries. With the recent rapidly increasing demand for large-sized, high-capacity, or high-energy-density rechargeable lithium batteries, there is a need to develop positive electrode active materials that can increase capacity while ensuring stability and enabling operation at high voltages.

### SUMMARY

A positive electrode active material including a lithium nickel-based composite oxide, a positive electrode, and a rechargeable lithium battery are provided, having a coating layer that improves capacity characteristics, initial charge/discharge efficiency, high-temperature storage characteristics, and high-temperature cycle-life characteristics.

In some embodiments, a positive electrode active material includes core particles in a form of secondary particles that are agglomerations of primary particles, including a lithium nickel-based composite oxide; and a coating layer disposed on the surface of the core particle and containing cobalt, aluminum, and yttrium.

In some example embodiments, a positive electrode includes a current collector; and a positive electrode active material layer on the current collector; wherein the positive electrode active material layer includes the aforementioned positive electrode active material.

In some example embodiments, a rechargeable lithium battery including the positive electrode; a negative electrode; and an electrolyte is provided.

The positive electrode active material according to some example embodiments and a rechargeable lithium battery using the positive electrode active material may exhibit low resistance, high initial charge/discharge capacity and efficiency, excellent high-temperature storage characteristics and high-temperature cycle-life characteristics, and long cycle-life characteristics.

### BRIEF DESCRIPTION OF THE DRAWINGS

FIG.1 is a view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.
FIG. 5 is an SEM image of the surface of the positive electrode active material prepared in Example 2.
FIG. 6 is an SEM image of the surface of the positive electrode active material prepared in Comparative Example 1.
FIG. 7 is an SEM image of the surface of the positive electrode active material prepared in Comparative Example 4.
FIG. 8 is an SEM image of the surface of the positive electrode active material prepared in Comparative Example 6.
FIG. 9 is a SEM-EDS image of yttrium in the coating layer on the surface of the positive electrode active material prepared in Example 2.
FIG. 10 is a SEM-EDS image of yttrium in the coating layer in the cross-section of the positive electrode active material prepared in Example 2.

### DETAILED DESCRIPTION

Hereinafter, specific embodiments will be described in detail so that those of ordinary skill in the art can easily implement the embodiments. However, this disclosure may be embodied in many different forms and is not to be construed as limited to the embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating the average particle diameter from this. As used herein, when a definition is not otherwise provided, the average particle diameter means a diameter (D₅₀) of particles having a cumulative volume of 50 vol% in the particle size distribution that is obtained by measuring the size (diameter or major axis length) of 20 particles at random in a scanning electron microscope image. The volume of a particle is calculated using the value read from the scanning electron microscope image on basis of the assumption that the particles have a spherical shape.

"Or" is not to be construed as an exclusive meaning, for example, "A or B" is construed to include A, B, A+B, and the like.

"Metal" includes ordinary metals, transition metals, and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Positive Electrode Active Material

In some embodiments, a positive electrode active material includes core particles in a form of secondary particles that are agglomerations of primary particles and including a lithium nickel-based composite oxide; and coating layers disposed on the surfaces of the core particle, with the coating layer including cobalt, aluminum, and yttrium.

In some embodiments, the coating layer including cobalt, aluminum, and yttrium on the surfaces of core particles improves high-temperature cycle-life characteristics, high-temperature storage characteristics, and initial charge/discharge efficiency by introducing a coating layer containing cobalt, aluminum, and yttrium. The coating layer strengthens the particle surfaces and forms a structural 3D lithium channel.

### Core Particles

The core particles according to some embodiments include a lithium nickel-based composite oxide represented by Chemical Formula 1.

[Chemical Formula 1] Liₐ₁Niₓ₁M¹₁M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1 ≤1.1 and 0≤b1≤0.1, M¹ and M² are different from each other and are each one or more of Al, B, Ba, Ca, Ce, Co, Cr, Cu, Fe, Mg, Mn, Mo, Nb, Si, Sn, Sr, Ta, Ti, V, W, Y, Zn, and Zr, and X is one or more of F, P, and S. In further embodiments with Chemical Formula 1, 0.6≤x1≤1, 0≤y1≤0.4, and 0≤z1≤0.4, or 0.8≤x1≤1, 0≤y1≤ 0.2, and 0≤z1≤0.2, or 0.9≤x1<1, 0<y1≤0.1, and 0≤z1≤0.1.

The lithium nickel-based composite oxide may be represented by the Chemical Formula 2 or Chemical Formula 3 as specific examples.

[Chemical Formula 2] Liₐ₂Niₓ₂CO_{y2}M³_{z2}O_{2-b2}X_{b2}

In Chemical Formula 2, 0.9≤a2≤1.2, 0.8≤x2<1, 0<y2≤0.2, 0≤z2≤0.2, 0.9≤ x2+y2+z2≤1.1 and 0≤b2≤0.1, M³ is one or more of Al, B, Ba, Ca, Ce, Cr, Cu, Fe, Mg, Mn, Mo, Nb, Si, Sn, Sr, Ta, Ti, V, W, Y, Zn, and Zr, and X is one or more of F, P, and S. In further embodiments with Chemical Formula 2, 0.9≤x2≤0.99, 0.01≤y2≤0.1, and 0≤z2≤0.1.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.8≤x3≤0.98, 0.01≤y3≤0.19, 0.01≤z3≤0.19, 0 ≤w3≤0.19, 0.9≤x3+y3+z3+w3≤1.1 and 0≤b3≤0.1, M⁴ is one or more of Al and Mn, M⁵ is one or more of B, Ba, Ca, Ce, Cr, Cu, Fe, Mg, Mo, Nb, Si, Sn, Sr, Ta, Ti, V, W, Y, Zn, and Zr, and X is one or more of F, P, and S. In further embodiments with Chemical Formula 3, 0.9≤x3≤0.98, 0.01≤y3≤0.09, 0.01≤z3≤0.09, and 0≤w3≤ 0.09.

The lithium nickel-based composite oxide may be a high nickel-based positive electrode active material having a nickel content, based on 100 mol% of a total metal excluding lithium, of greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol%, and less than or equal to about 99 mol%, for example, less than or equal to about 95 mol%. The high-nickel-based positive electrode active materials can be used to provide high-capacity, high-density rechargeable lithium batteries.

In the lithium nickel-based composite oxide, a cobalt content, based on 100 mol% of a total metal excluding lithium, may be greater than or equal to about 1 mol%, for example about 1 mol% to about 10 mol%, about 1 mol% to about 5 mol%, or about 1 mol% to about 3 mol%. When the cobalt content is in these ranges, particle damage during a compression process is effectively suppressed, accelerated deterioration of particles during charging and discharging is prevented, and a kinetic balance of lithium ions and electrons is formed, which has the advantage of improving cycle-life characteristics of a rechargeable lithium battery.

The lithium nickel-based composite oxide may be, for example, a lithium nickel-cobalt-aluminum-based composite oxide that further includes aluminum in addition to nickel and cobalt. When aluminum is included in the lithium nickel-based composite oxide, it may advantageously maintain a stable layered structure even when a small amount of cobalt element is included. The amount of aluminum based on 100 mol% of the total metal in the lithium nickel-based composite oxide excluding lithium may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. Here, the amount of aluminum refers to a content of aluminum present in the core particles. When the aluminum content is in these ranges, even if a small amount of cobalt is included in the core particles, a stable structure may be maintained, structural collapse due to charging and discharging may be suppressed, and long cycle-life characteristics of the positive electrode active material may be realized.

The core particles may be in a form of secondary particles that are agglomerations of primary particles. The secondary particles may be spherical, ellipsoidal, polyhedral, irregularly shaped, or a combination thereof, and the primary particles may be spherical, ellipsoidal, plate-shaped, or a combination thereof.

The core particles may be easily chemically attacked by components of the electrolyte when under high-temperature conditions. Thus, side reactions with the electrolyte may occur frequently, which result in reduced cycle-life and safety. However, these problems may be solved by introducing a coating layer as in the embodiments described below.

### Coating Layer

According to some embodiments, a positive electrode active material includes coating layers disposed on the surfaces of core particles, with the coating layers including cobalt, aluminum, and yttrium.

In the positive electrode active material, the amount of cobalt in the coating layer based on 100 mol% of the total metal excluding lithium may be about 0.1 mol% to about 5.0 mol%, for example, about 0.5 mol% to about 4.0 mol%, about 1.0 mol% to about 3.0 mol%, or about 1.5 mol% to about 2.5 mol%. The cobalt content refers only to the amount of cobalt contained in the coating layers, regardless of the cobalt included in the core particles.

In the positive electrode active material, the amount of aluminum in the coating layers based on 100 mol% of the total metal excluding lithium may be about 0.1 mol% to about 3.5 mol%, for example, about 0.1 mol% to about 3.0 mol%, about 0.2 mol% to about 2.5 mol%, about 0.2 mol% to about 2.0 mol%, about 0.3 mol% to about 1.5 mol%, about 0.3 mol% to about 1.0 mol%, or about 0.4 mol% to about 0.7 mol%. The aluminum content of the coating layer refers only to the amount of aluminum included in the coating layers, regardless of the aluminum included in the core particles.

Additionally, in the positive electrode active material, the amount of yttrium in the coating layer based on 100 mol% of the total metal excluding lithium may be about 0.1 mol% to about 0.5 mol%, for example, about 0.1 mol% to about 0.4 mol%, about 0.1 mol% to about 0.3 mol%, or about 0.1 mol% to about 0.2 mol%. The yttrium content of the coating layer refers only to the content of yttrium included in the coating layer, regardless of the yttrium that may be included in the core particles.

In the positive electrode active material, a ratio of cobalt content to aluminum content (Co/Al) in the positive electrode active material based on 100 mol% of the total metal excluding lithium may be about 1.5 to about 2, for example, about 1.6 to about 2. This refers to the content of cobalt and aluminum included in the coating layer and the core particles. When these ratios are satisfied, the initial charge/discharge efficiency, high-temperature storage, and high-temperature cycle-life characteristics of a rechargeable lithium battery may be improved.

The cobalt, aluminum and yttrium contents in the coating layer may be measured, for example, bySEM-EDS (scanning electron microscopy - energy dispersive X-ray spectroscopy) analysis of the surface of the positive electrode active material. When the cobalt, aluminum, and yttrium contents in the coating layers are in these ranges, it is possible to form coating layers that are thin and uniform, the resistance of the positive electrode active material does not increase, and side reactions with an electrolyte are effectively suppressed, thereby improving cycle-life characteristics and storage characteristics of a rechargeable lithium battery under high-temperature conditions. When the cobalt, aluminum, and yttrium contents in the coating layer are excessive, uniform coating layers may not be formed or resistance may increase, which may result in reduced charge/discharge efficiency and cycle-life characteristics. When the cobalt, aluminum, and yttrium contents in the coating layers is too little, coating layers of appropriate thicknesses may not be formed, which may result in less suppressing of side reactions with the electrolyte.

The coating layer according to some embodiments may be in the form of films that continuously wraps around the surfaces of the core particles, or may be in the form of shells that wrap around the entire surfaces of the core particles. This is distinct from a structure in which only portions of the surfaces of the core particles are coated. According to some embodiments, the coating layer may be in a form that completely covers the surfaces of the core particles while being formed very thin and uniform, whereby the positive electrode active material has improved structural stability without increasing resistance or decreasing capacity, effectively suppressing side reactions with the electrolyte, reducing gas generation under high voltage and high temperature conditions, and providing long cycle-life characteristics.

During the process of forming the cobalt and aluminum coating layers, cobalt, and aluminum may diffuse into secondary particles. Accordingly, the positive electrode active material according to some embodiments may further include grain boundary coating portions located on the surfaces of the primary particles in the internal portions of the secondary particles and containing cobalt and aluminum. The internal portion of a secondary particle means the entire interior except for the surface of the secondary particle. For example, the internal portion may mean the entire interior from a depth of approximately 1 µm from the outer surface. The internal portions can also be expressed as an inaccessible portion of distilled water when washing the secondary particles of the positive electrode active material with distilled water. The grain boundary coating portion is distinct from the coating layer on the surface of a secondary particle, and refers to the coating portion formed on the surfaces of primary particles located in the internal portions of the secondary particles. The presence of the grain boundary coating portion may be confirmed by SEM-EDS analysis of the cross-section of the positive electrode active material. By forming a cobalt and aluminum grain boundary coating portion, cobalt and aluminum do not act as resistance, and structural collapse or breakage of the positive electrode active material due to charging and discharging may be effectively suppressed.

The cobalt and aluminum contents within the grain boundary coating portion are not limited. For example, the cobalt content within the grain boundary coating portions may be less than the cobalt content within the coating layers, and the aluminum content within the grain boundary coating portions may be less than the aluminum content within the coating layers.

Yttrium may be present in islands form within the coating layers according to some embodiments.

Each of the coating layers according to some embodiments may have a thickness of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If the coating layers are in these thickness ranges, the structural stability of the positive electrode active material may be improved without increasing resistance or reducing capacity due to the coating, and side reactions with the electrolyte may be effectively suppressed. The thickness of the coating layers may be measured, for example, by SEM (scanning electron microscopy), TEM (transmission electron microscope), TOF-SIMS (time-of-flight secondary ion mass spectrometry), XPS (X-ray photoelectron spectroscopy), or EDS (energy-dispersive spectroscopy) analysis, and for example, by measuring EDS line profile analysis of a cross-section of 20 positive electrode active material particles and calculating the average value.

The coating layers according to some example embodiments are thin, with each having a thickness of tens to hundreds of nanometers, and each being uniform. For example, a deviation in a coating layer thickness in one positive electrode active material particle may be less than or equal to about 20%, less than or equal to about 18%, or less than or equal to about 15%. Here, the deviation in the coating layer thickness refers to the coating layer thickness within one positive electrode active material particle. The deviation of the coating layer thickness may be calculated by measuring the thickness of about 10 points in an electron microscope image of the cross-section of one positive electrode active material particle to calculate an arithmetic average, and then dividing the absolute value of the difference between one thickness data and the arithmetic mean value by the arithmetic mean value, and then multiplying by 100. When the deviation or standard deviation of the coating layer thickness is in the above ranges, coating layers of uniform thickness are formed in good shapes on the surfaces of the positive electrode active material particles. Accordingly, structural stability of the positive electrode active material is improved, side reactions with the electrolyte are effectively suppressed, and an increase in resistance or a decrease in capacity due to coating can be minimized.

The coating layer may contain nickel in addition to cobalt, aluminum and yttrium. The nickel may be included in the core particles and introduced during the coating layer formation process. The nickel content is not limited. According to some embodiments, the coating layer essentially contains cobalt, aluminum, and yttrium, while optionally containing nickel, is formed to have a thin, uniform thickness. Such a coating layer improves high-voltage characteristics of the positive electrode active material and enhances cycle-life characteristics of a battery.

The coating layer may also include sulfur in addition to cobalt, aluminum, and yttrium. The sulfur may be introduced during the process of introducing aluminum sulfate among aluminum raw materials or cobalt sulfate among cobalt raw materials to form the coating layers. The sulfur content is not particularly limited. The coating layer according to some embodiments essentially contain cobalt, aluminum, and yttrium, while optionally containing sulfur. Such a configuration can improve cycle-life characteristics of a positive electrode active material.

The span of the positive electrode active material according to some example embodiments may be about 0.9 to about 1.2, for example about 1.0 to about 1.2, about 0.9 to about 1.1, or about 1.0 to about 1.1. At this time, the span may be calculated using Equation 1 below. When the span of the positive electrode active material is within these ranges, the density of the positive electrode active material layer including the positive electrode active material increases, thereby resulting in a high energy density and exhibiting a high initial charge/discharge capacity and efficiency even under high voltage driving conditions. [Equation 1] $Span = \left({D}_{90}-{D}_{10}\right) / {D}_{50}$ In Equation 1, D₁₀ is a particle diameter of a particle with a cumulative volume of 10 vol% in the particle size distribution, D₅₀ is a particle diameter of a particle with a cumulative volume of 50 vol% in the particle size distribution, and D₉₀ is the particle diameter of a particle with a cumulative volume of 90 vol% in the particle size distribution.

The average particle diameter (D₅₀) of the positive electrode active material according to some embodiments may be about 8 µm to about 25 µm, for example about 9 µm to about 20 µm, or about 10 µm to about 15 µm. The average particle diameter may be measured by a method well known to those skilled in the art, for example, by a particle size analyzer, or by a transmission electron microscope image, or a scanning electron microscope image. Alternatively, it is possible to obtain an average particle diameter value by measuring using a dynamic light scattering method, performing data analysis, counting the number of particles for each particle size range, and calculating the average particle diameter from this. Here, the average particle diameter means a diameter (D₅₀) of particles having a cumulative volume of 50 vol% in the particle size distribution that is obtained by measuring the size (diameter or major axis length) of about 20 particles at random in a scanning electron microscope image for positive electrode active materials.

The D₁₀ of the positive electrode active material may be about 1 µm to about 12 µm, for example, about 2 µm to about 11 µm, about 3 µm to about 10 µm, about 4 µm to about 9 µm, or about 5 µm to about 8 µm. Here, D₁₀ may be obtained by using a particle size analyzer to obtain a particle size distribution, and the diameter of particles having a cumulative volume of 10 vol% in the particle size distribution may be taken as the D₁₀.

The D₉₀ of the positive electrode active material may be about 15 µm to about 25 µm, for example, about 16 µm to about 24 µm, about 17 µm to about 23 µm, or about 18 µm to about 22 µm. Here, D₉₀ may be obtained by using a particle size analyzer to obtain a particle size distribution, and the diameter of particles having a cumulative volume of 90 vol% in the particle size distribution may be taken as the D₉₀.

When D₅₀, D₁₀, and D₉₀ of the positive electrode active material are in the above ranges, the density of the positive electrode active material layer may be maximized, thereby increasing the capacity of the rechargeable lithium battery while also improving the energy density and cycle-life characteristics.

Particle size analysis of the positive electrode active material may be performed using, for example, a particle size analyzer using laser diffraction, such as LS13320 (Beckmann Coulter). As particle size analysis conditions, the pump speed may be 55%, ultrasonic dispersion may be performed at 40 kHz for 30 seconds, a run length may be 60 seconds, a refractive index may be 1.6, an e-factor (extinction factor) may be 1.00, a sample amount may be 0.20 g, and a dispersant added to the sample may be 1 ml of 10% sodium hexametaphosphate.

### Method of Preparing Positive Electrode Active Material

In some embodiments, a method of preparing a positive electrode active material includes: (i) preparing core particles including a lithium nickel-based composite oxide; (ii) adding and mixing a cobalt raw material, an aluminum raw material, and a yttrium raw material into an aqueous solvent to prepare a coating solution; (iii) adding and mixing the core particles into the coating solution to prepare a mixed solution; and (iv) removing the aqueous solvent from the mixed solution, and then drying and heat-treating the product to obtain a positive electrode active material.

In the method of preparing a positive electrode active material according to some embodiments, core particles including the lithium nickel-based composite oxide may be prepared by mixing a nickel-based composite hydroxide and a lithium raw material and performing a first heat treatment. The nickel-based composite hydroxide may be a precursor of core particles and may be in a form of secondary particles that are agglomerations of primary particles. The nickel-based composite hydroxides may be prepared by a co-precipitation method.

In the nickel-based composite hydroxide, a nickel content based on 100 mol% of the total metal may be greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol%, and may be less than or equal to about 99 mol%, for example, less than or equal to about 95 mol%. When the nickel content is in these ranges, high capacity can be achieved, which provides for high-capacity, high-density rechargeable lithium batteries.

In the nickel-based composite hydroxide, a cobalt content based on 100 mol% of the total metal may be greater than or equal to about 1 mol%, for example, about 1 mol% to about 10 mol%, about 1 mol% to about 5 mol%, or about 1 mol% to about 3 mol%. When the cobalt content sis in these ranges, particle damage during a compression process is effectively suppressed, accelerated deterioration of particles during charging and discharging is prevented, and a kinetic balance of lithium ions and electrons is formed, which has the advantage of improving cycle-life characteristics of a rechargeable lithium battery.

When the nickel-based composite hydroxide includes aluminum, an aluminum content based on 100 mol% of the total metal may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. When the aluminum content in the composite hydroxide is in these ranges, the structural stability of the positive electrode active material may be improved while providing high capacity, and the production cost may be lowered.

The nickel-based composite hydroxide may be represented, for example, by Chemical Formula 11.

[Chemical Formula 11] Niₓ₁₁M¹¹_{y1}M¹²_{z11}(OH)₂

In Chemical Formula 11, 0.3≤x11≤1, 0≤y11≤0.7, 0≤z11≤0.7 and 0.9≤ x11+y11+z11 ≤ 1.1, M¹¹ and M¹² are different from each other and each independently one or more of Al, B, Ba, Ca, Ce, Co, Cr, Cu, Fe, Mg, Mn, Mo, Nb, Si, Sn, Sr, Ta, Ti, V, W, Y, Zn, and Zr. In further embodiments of Chemical Formula 11, 0.6≤x11≤1, 0≤y11≤0.4 and 0≤z11≤0.4, or 0.8≤x11≤1, 0≤y11≤0.2 and 0≤z11≤0.2, or 0.9≤x11<1, 0<y11≤0.1 and 0≤z11≤0.1.

The nickel-based composite hydroxide may be represented by Chemical Formula 12 or Chemical Formula 13 as specific examples.

[Chemical Formula 12] Niₓ₁₂CO_{y12}M¹³_{z12}(OH)₂

In Chemical Formula 12, 0.8≤x12<1, 0<y12≤0.2, 0≤z12≤0.2 and 0.9≤ x12+y12+z12≤1.1, M¹³ is one or more of Al, B, Ba, Ca, Ce, Cr, Cu, Fe, Mg, Mn, Mo, Nb, Si, Sn, Sr, Ta, Ti, V, W, Y, Zn, and Zr. In further embodiments of Chemical Formula 12, 0.9≤x12≤0.99, 0.01≤y12≤0.1 and 0≤z12≤0.1.

[Chemical Formula 13] Niₓ₁₃Co_{y13}M¹⁴_{z13}M¹⁵_{w13}(OH)₂

In Chemical Formula 13, 0.8≤x13≤0.98, 0.01≤y13≤0.19, 0.01≤z13≤0.19, 0 ≤w13≤0.19 and 0.9≤x13+y13+z13+w13≤1.1, M¹⁴ is one or more of Al and Mn, and M¹⁵ is one or more of B, Ba, Ca, Ce, Cr, Cu, Fe, Mg, Mo, Nb, Si, Sn, Sr, Ta, Ti, V, W, Y, Zn, and Zr. In further embodiments of Chemical Formula 13, 0.9≤ x13≤0.98, 0.01≤y13≤0.09, 0.01≤z13≤0.09 and 0≤w13≤0.09.

The nickel-based composite hydroxide may be in a form of particles, and the average particle diameter (D₅₀) of the particles may be about 10 µm to about 18 µm, about 11 µm to about 16 µm, or about 12 µm to about 15 µm.

The nickel-based composite hydroxide and lithium raw material may be mixed in a molar ratio of metal in the nickel-based composite hydroxide to lithium in the lithium raw material of about 1:0.9 to about 1:1.8, for example, in a molar ratio of metal in the nickel-based composite hydroxide to lithium in the lithium raw material of about 1:0.9 to about 1:1.5 or about 1:1 to about 1:1.2.

The first heat treatment may be carried out in an oxygen atmosphere and may be carried out at a temperature range of, for example, about 650 °C to about 850 °C, about 680 °C to about 800 °C, or about 710 °C to about 750 °C. The first heat treatment may be carried out for about 2 hours to about 20 hours, or about 8 hours to about 15 hours.

The lithium nickel-based composite oxide may be obtained through the first heat treatment. In the lithium nickel-based composite oxide, based on 100 mol% of total metal excluding lithium, a nickel content may be greater than or equal to about 80 mol%, a cobalt content may be about 1 mol% to about 3 mol%, and an aluminum content may be about 1 mol% to about 3 mol%. These composite oxides have a significantly different amount of residual lithium on the particle surfaces and have different surface characteristics as compared to oxides of other compositions, such as lithium nickel-cobalt-manganese-based composite oxides or lithium cobalt-based oxides with which it is not possible to form a good coating layer in the form of a uniform film with existing coating methods. A method according to embodiments of the present disclosure simultaneously coats the particle surfaces of a lithium nickel-based composite oxide with cobalt, aluminum, and yttrium to a very uniform thickness.

In some embodiments, a coating solution is prepared by mixing a cobalt raw material, an aluminum raw material, and an yttrium raw material in an aqueous solvent. The core particles including the lithium nickel-based composite oxide obtained by the first heat treatment are then added and mixed. Then drying and a second heat treatment are performed, thereby forming coating layers according to some example embodiments. This is a salt-dissolution wet coating method and may be a pre-addition method in which the salt, which is the coating raw material, is first completely dissolved and then the active material particles are added.

The aqueous solvent may include distilled water, an alcohol-based solvent, or a combination thereof. The aluminum raw material may be, for example, aluminum sulfate, aluminum nitrate, aluminum acetate, or a combination thereof. The cobalt raw material may be cobalt sulfate, cobalt nitrate, cobalt acetate, or a combination thereof, and the yttrium raw material may be yttrium sulfate, yttrium nitrate, yttrium acetate, or a combination thereof.

Based on a total of 100 mol% of the metal excluding lithium in the core particles, cobalt of the cobalt raw material, aluminum of the aluminum raw material, and yttrium of the yttrium raw material, the amount of cobalt in the cobalt raw material may be about 0.1 mol% to about 5.0 mol%, for example, about 0.5 mol% to about 4.0 mol%, about 1.0 mol% to about 3.0 mol%, or about 1.5 mol% to about 2.5 mol%. By providing the cobalt coating content within these ranges, a coating layer having a thin and uniform thickness may be formed, and storage and long cycle-life characteristics under high-temperature operating conditions of a battery including the positive electrode active material may be improved.

Based on a total of 100 mol% of the metal excluding lithium in the core particles, cobalt of the cobalt raw material, aluminum of the aluminum raw material, and yttrium of the yttrium raw material, an amount of aluminum in the aluminum raw material may be about 0.1 mol% to about 3.5 mol%, for example about 0.1 mol% to about 3.0 mol%, about 0.2 mol% to about 2.5 mol%, about 0.2 mol% to about 2.0 mol%, about 0.3 mol% to about 1.5 mol%, about 0.3 mol% to about 1.0 mol%, or about 0.4 mol% to about 0.7 mol%. By providing the aluminum coating amount within these ranges, a coating layer having a thin and uniform thickness may be formed, and storage and long cycle-life characteristics under high-temperature operating conditions of a battery including the positive electrode active material may be improved.

Based on a total of 100 mol% of the metal excluding lithium in the core particles, cobalt of the cobalt raw material, aluminum of the aluminum raw material, and yttrium of the yttrium raw material, an amount of yttrium in the yttrium raw material may be about 0.1 mol% to about 0.5 mol%, for example about 0.1 mol% to about 0.4 mol%, about 0.1 mol% to about 0.3 mol%, or about 0.1 mol% to about 0.2 mol%. By providing the yttrium coating content within these ranges, a coating layer having a thin and uniform thickness may be formed, and storage and long cycle-life characteristics under high-temperature operating conditions may be improved.

The mixing of the cobalt raw material, the aluminum raw material, and the yttrium raw material in the aqueous solvent may be performed for about 1 minute to about 60 minutes, for example, about 3 minutes to about 30 minutes, or about 5 minutes to about 10 minutes. In addition, the mixing may be performed at a mixing speed of about 100 rpm to about 800 rpm, for example, about 200 rpm to about 600 rpm, or about 250 rpm to about 500 rpm. With these mixing conditions, the cobalt raw material, the aluminum raw material, and the yttrium raw material may be completely dissolved in the aqueous solvent, a coating solution that is colorless and transparent is prepared, and the coating solution may be used to form a uniform coating layer. In some embodiments, the completely mixed coating solution may have a pH of about 1.5 to about 4, for example, about 2.0 to about 3.5, about 2.5 to about 3.3, about 2.7 to about 3.3, or about 2.9 to about 3.2.

Subsequently, the core particles are added to the prepared coating solution. The coating quality may be improved by adding the core particles while stirring the coating solution. The time for introducing the core particles into the coating solution may be about 30 seconds/500 g to about 2 minutes/500 g, for example, about 30 seconds/500 g to about 1.5 minutes/500 g, and the like. The core particles may be added at an appropriate speed adjusted to control pH of a supernatant after completing the coating, thereby effectively forming uniform coating layers. If the speed of adding the core particles is too slow, a reaction rate for each particle may vary, thereby making it impossible to form the uniform coating layer. If the speed of adding the core particles is too fast, pH may quickly change, which prevents the formation of a uniform coating layer.

After adding all of the core particles to the coating solution, the stirring may be performed for about 15 minutes to about 60 minutes, for example, about 20 minutes to about 50 minutes, or about 30 minutes to about 45 minutes. The time from the start of the addition of the core particles to the coating solution to the completion of the stirring, that is, the coating reaction time may be adjusted to about 1 hour.

In some embodiments when the addition and mixing of the core particles into the coating solution is stopped, that is, when the mixing or the coating is completed, the supernatant may have pH within a range of about 5.5 to about 8.5. If the supernatant has pH of less than about 5.5, the acidity becomes too strong and a uniform coating layer may not be formed. If pH is greater than about 8.5, the alkalinity becomes too strong, making it difficult to form the uniform coating layer.

After removing the aqueous solvent from the mixed solution, the obtained product may be dried, for example, at about 40 °C to about 240 °C, about 100 °C to about 220 °C, or about 150 °C to about 200 °C, under a vacuum condition. Accordingly, a satisfactory coating product may be obtained with these conditions.

The completely dried product after removing the aqueous solvent from the mixed solution may be referred to as a coated product. The coated product may include the core particles and coating layers formed on the surfaces of the core particles, with the coating layers including cobalt, aluminum, and yttrium. The coating layers may be a fiber shape, a net shape, or a spider web shape. Such meshes may be continuously formed across the surfaces of the core particles. The mesh-shaped coating layers may wrap the core particles with a very thin and uniform thickness, thereby strengthening the surface of the positive electrode active material and improving structural stability. As result, high-temperature and high-voltage characteristics of a battery including the positive electrode active material may be improved.

The aforementioned heat treatment after the mixing the nickel-based composite hydroxide and the lithium raw material may be referred to as a first heat treatment, and the heat treatment of the coated product may be referred to as a second heat treatment. The second heat treatment may be a process of forming the coating layer performed under an oxygen atmosphere within a temperature range of about 600 °C to about 850 °C, about 650 °C to about 800 °C, or about 700 °C to about 750 °C, for about 2 hours to about 20 hours or for about 3 hours to about 10 hours.

### Positive Electrode

In some embodiments, a positive electrode includes a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material. The positive electrode active material layer may further include a binder, a conductive material, or a combination thereof.

According to some embodiments, the positive electrode active material layer may have a loading level of about 10 mg/cm² to about 40 mg/cm², for example, about 10 mg/cm² to about 30 mg/cm² or about 10 mg/cm² to about 20 mg/cm². In addition, in the final positive electrode obtained through compression, the positive electrode active material layer may have density of about 3.3 g/cc to about 4.5 g/cc, for example, about 3.3 g/cc to about 4.0 g/cc, about 3.4 g/cc to about 4.2 g/cc, about 3.5 g/cc to about 3.85 g/cc, about 3.3 g/cc to about 3.85 g/cc, or about 3.4 g/cc to about 4.2 g/cc. If the positive electrode active material according to some example embodiments is applied, it may be advantageous to implement such loading levels and densities of positive electrode, and a positive electrode with such loading levels and density ranges provide for a high-capacity and high-energy density rechargeable lithium battery.

The positive electrode active material layer may have a thickness of about 5 µm to about 200 µm, for example, about 5 µm to about 180 µm, or about 10 µm to about 150 µm. When the positive electrode active material layer has a thickness within the ranges, a high-capacity and high-energy density battery may be provided.

### Binder

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

### Conductive Material

The conductive material is used to impart conductivity to the electrode, and any material that does not cause an undesirable chemical change and conducts electrons can be used in the battery. Examples of the conductive material include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

The amounts of the binder and the conductive material may be about 0.5 wt% to about 5 wt%, respectively, based on 100 wt% of the positive electrode active material layer.

The current collector may be formed from an aluminum thin film, but is not limited thereto.

### Rechargeable Lithium Battery

Some embodiments provide a rechargeable lithium battery including the aforementioned positive electrode, a negative electrode, and an electrolyte. For example, a rechargeable lithium battery may include a positive electrode, a negative electrode, a separator between the positive electrode and the negative electrode, and an electrolyte solution.

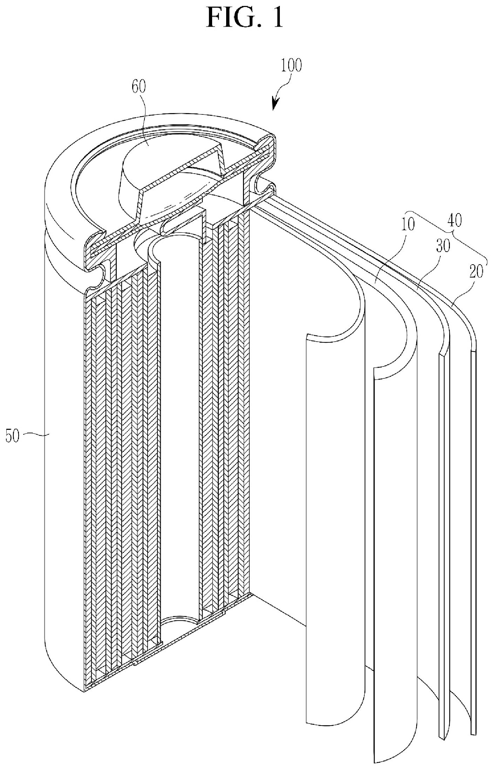

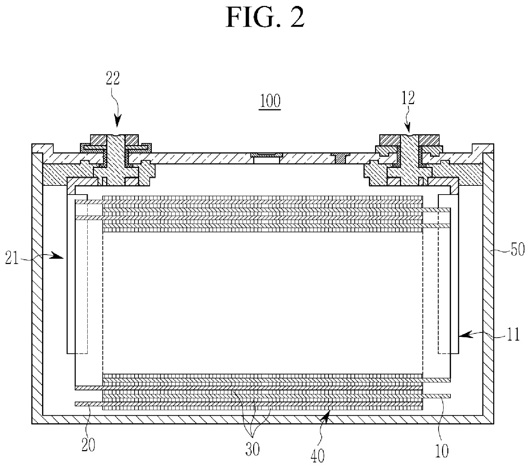

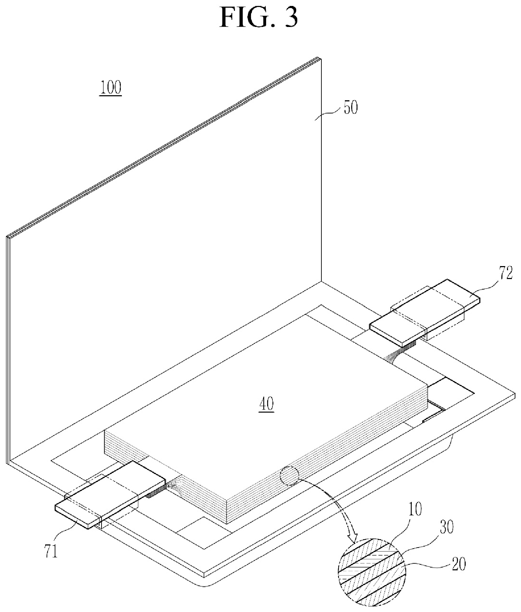

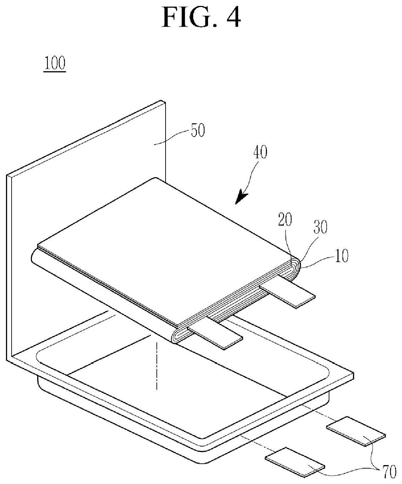

The rechargeable lithium battery may be cylindrical, prismatic, pouch, coin, and the like depending on its shape. FIGS. 1 to 4 are schematic diagrams showing rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, that is, a positive electrode tab 71 and a negative electrode tab 72 forming an electrical path for inducing the current formed in the electrode assembly 40 to outside of the battery.

### Negative Electrode

The negative electrode may include a current collector and a negative electrode active material layer on the current collector, and the negative electrode active material layer may include a negative electrode active material. The negative active material layer may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. For example, the silicon-carbon composite may include a secondary particles (core) in which silicon primary particles are assembled and an amorphous carbon coating layers (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, based on 100 wt% of the silicon-carbon composite, an amount of silicon may be about 10 wt% to about 50 wt% and an amount of the amorphous carbon may be about 50 wt% to about 90 wt%. In addition, if the composite includes silicon, amorphous carbon, and crystalline carbon, based on 100 wt% of the silicon-carbon composite, an amount of silicon may be about 10 wt% to about 50 wt%, an amount of the crystalline carbon may be about 10 wt% to about 70 wt%, and an amount of the amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, be in the form of a silicon alloy, or be in an oxidized form. The oxidized form of silicon may be represented by SiOₓ (0<x≤2). The atomic content ratio of Si:O, which indicates a degree of oxidation, may be about 99:1 to about 33:67. Here, an average particle diameter (D₅₀) indicates a diameter of particle where a cumulative volume is about 50 vol% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio may be a weight ratio of about 1:99 to about 90:10.

### Binder

The binder serves to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous. The dry binder may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause an undesirable chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, as is known to those skilled in the art.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or a copolymer or mixture of two or more thereof. The porous substrate may include glass fibers, or may comprise a composite membrane of polymer and glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### 1. Preparation of Positive Electrode Active Material

Ni_{0.965}Co_{0.02}Al_{0.015}(OH)₂ and LiOH were mixed in a molar ratio of 1:1.03 and then, were subjected to first heat treatment at 730 °C for 13 hours under an oxygen atmosphere to prepare a lithium nickel-based composite oxide having a composition of Li_{1.03}Ni_{0.965}Co_{0.02}Al_{0.015}O₂ in the form of secondary particles having an average particle diameter (D₅₀) of about 12 µm.

In a 1 L reactor, a coating solution was prepared by adding 600 g of distilled water, cobalt sulfate, aluminum sulfate, and yttrium sulfate and then stirring the mixture at about 350 rpm for about 5 minutes for salt dissolution. The coating solution, in which the salts were completely dissolved, was confirmed to be colorless and transparent. While continuously stirring the coating solution, 500 g of the lithium nickel-based composite oxide was added thereto for 1.5 minutes. Then stirring continued for 30 minutes. The cobalt sulfate was had a cobalt content of 2.0 mol% based on 100 mol% of a total metal excluding lithium in a final positive electrode active material, the aluminum sulfate had an aluminum content of 0.5 mol% based on 100 mol% of a total metal excluding lithium in the final positive electrode active material, and the yttrium sulfate had a yttrium content of 0.1 mol% based on 100 mol% of a total metal excluding lithium in the final positive electrode active material.

After removing the solvent from the mixed solution by using an aspirator and a filter press, a coated product was obtained by vacuum-drying at 190 °C.

The coated product was subjected to second heat treatment at 710 °C for 10 hours under the oxygen atmosphere to thereby obtain the final positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed in an N-methyl-2-pyrrolidone (NMP) solvent to prepare positive electrode active material layer slurry. The slurry was coated on an aluminum foil current collector and then dried and compressed to make a positive electrode. The positive electrode active material layer had a loading level of 20 mg/cm², and the final positive electrode obtained through the compression had density of about 3.4 g/cc.

A negative electrode active material layer slurry was prepared by mixing 97.5 wt% of graphite negative electrode active material, 1.5 wt% of carboxymethyl cellulose, and 1 wt% of styrene butadiene rubber in a water solvent. The negative electrode active material layer slurry was coated on a copper foil current collector, dried, and pressed to make a negative electrode.

The positive and negative electrodes were used with a polytetrafluoroethylene separator and an electrolyte solution prepared by mixing ethylene carbonate and dimethyl carbonate in a volume ratio of 3:7 and dissolving 1 M LiPF₆ in the mixed solvent, to thereby make a rechargeable lithium battery cell according to a common method.

### Example 2

A positive electrode active material and a rechargeable lithium battery cell were made in the same manner as in Example 1 except that the yttrium content of the yttrium sulfate was 0.2 mol% based on 100 mol% of a total metal excluding lithium in the final positive electrode active material.

### Comparative Example 1

A positive electrode active material and a rechargeable lithium battery cell were made in the same manner as in Example 1 except that the positive electrode active material was prepared by performing the cobalt coating process without the aluminum and yttrium coating processes, that is, without adding the aluminum sulfate and the yttrium sulfate to the lithium nickel-based composite oxide of Example 1.

### Comparative Example 2

A positive electrode active material and a rechargeable lithium battery cell were made in the same manner as in Comparative Example 1 except that the cobalt content of the cobalt sulfate was designed to be 3.0 mol% based on 100 mol% of a total metal excluding lithium in the final positive electrode active material.

### Comparative Example 3

A positive electrode active material and a rechargeable lithium battery cell were made in the same manner as in Example 1 except that the positive electrode active material was prepared by performing the aluminum coating process alone without the cobalt and yttrium coating processes, that is, without adding the cobalt sulfate and the yttrium sulfate to the lithium nickel-based composite oxide of Example 1.

### Comparative Example 4

A positive electrode active material and a rechargeable lithium battery cell were made in the same manner as in Comparative Example 3 except that the aluminum content of the aluminum sulfate was designed to be 1.0 mol% based on 100 mol% of a total metal excluding lithium in the final positive electrode active material.

### Comparative Example 5

A positive electrode active material and a rechargeable lithium battery cell were made in the same manner as in Example 1 except that the positive electrode active material was prepared by performing the cobalt and aluminum coating processes alone without the yttrium coating process, that is, without adding the yttrium sulfate to the lithium nickel-based composite oxide of Example 1.

### Comparative Example 6

A positive electrode active material and a rechargeable lithium battery cell were made in the same manner as in Comparative Example 5 except that the cobalt content of the cobalt sulfate was 3.0 mol% based on 100 mol% of a total metal excluding lithium in the final positive electrode active material, and the aluminum content of the aluminum sulfate was 1.0 mol% based on 100 mol% of a total metal excluding lithium in the final positive electrode active material.

### Evaluation 1: Surface and Cross-section Analysis of Positive Electrode Active Material

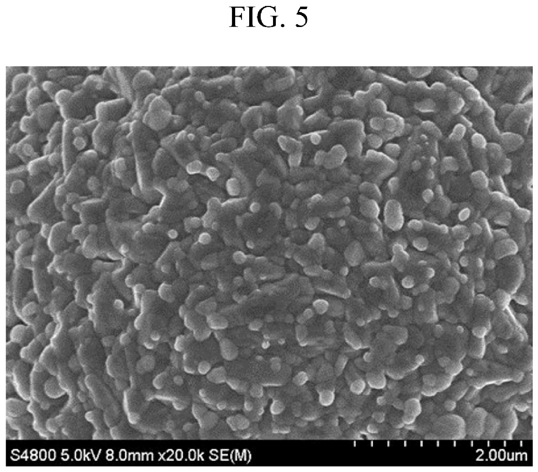

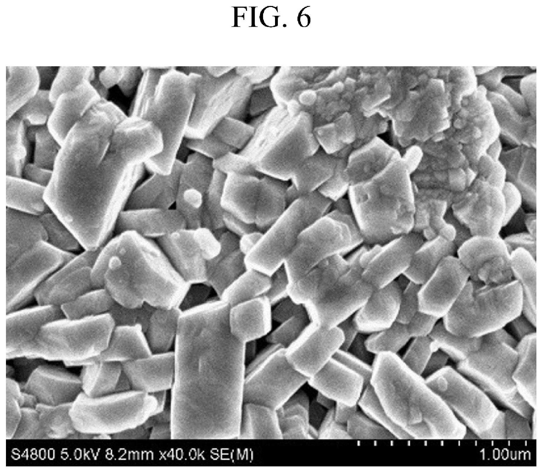

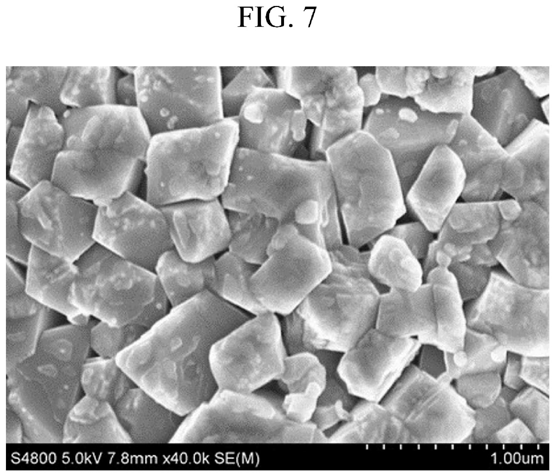

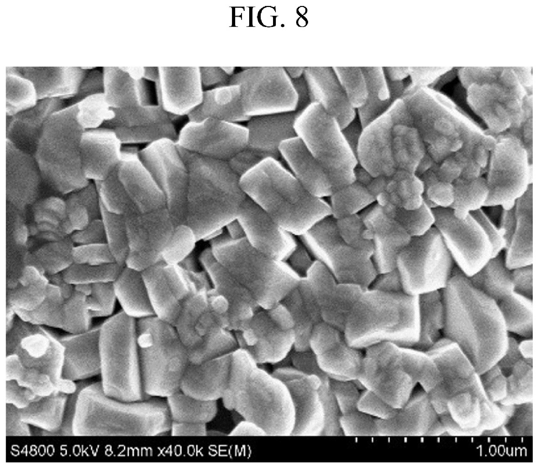

The positive electrode active materials of Example 2 and Comparative Examples 1, 4, and 6 were compared by taking images using a scanning electron microscope (SEM). FIG. 5 is an SEM image of the surface of the positive electrode active material prepared in Example 2, FIG. 6 is an SEM image of the surface of the positive electrode active material prepared in Comparative Example 1, FIG. 7 is an SEM image of the surface of the positive electrode active material prepared in Comparative Example 4, and FIG. 8 is an SEM image of the surface of the positive electrode active material prepared in Comparative Example 6.

Referring to FIGS. 6 to 8, a cobalt and/or aluminum coating layer was confirmed to be formed on the core particle surface. But, as shown in FIG. 5, an aluminum and cobalt coating layer and a yttrium coating layer were formed on the core particle surface.

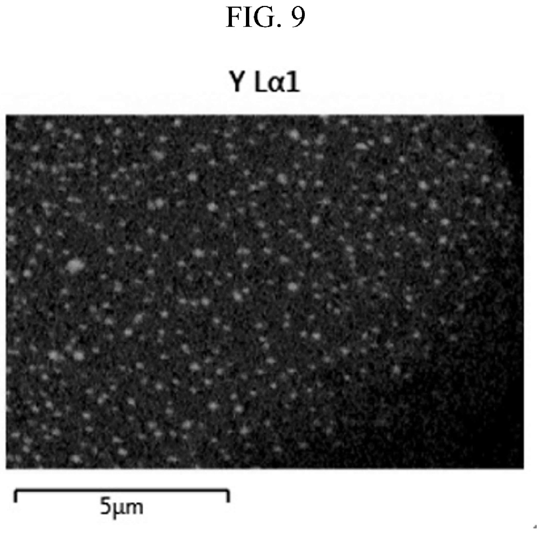

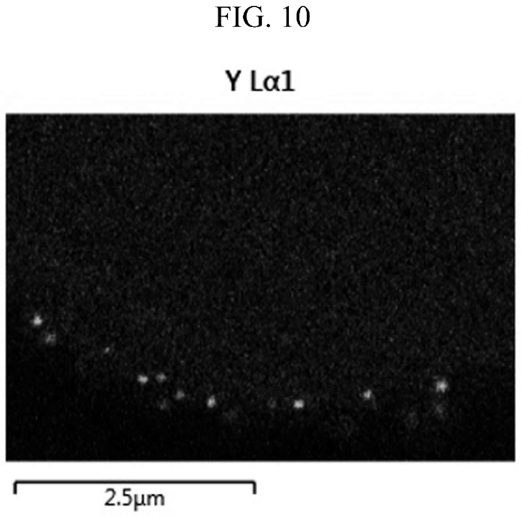

Subsequently, the positive electrode active material of Example 2 was compared by taking an image with SEM-EDS (scanning electron microscopy - energy dispersive X-ray spectroscopy). The SEM-EDS analysis was performed under conditions of 3 kV and 0.8 nA by using Helios G4 HX made by Thermo Fisher Scientific Inc. FIG. 9 is a SEM-EDS image of yttrium in the coating layer in the surface of the positive electrode active material prepared in Example 2, and FIG. 10 is a SEM-EDS image of yttrium in the coating layer when observing the cross-section of the positive electrode active material prepared in Example 2.

Referring to FIGS. 9 and 10, yttrium was confirmed to be included in a core particle surface coating layer, in particular, to be distributed in island shapes in the core particle surface coating layer.

### Evaluation 2: Analysis of Cobalt, Aluminum, and Yttrium Contents on the Surface of Positive Electrode Active Material

The cobalt, aluminum, and yttrium contents on the positive electrode active material surface were subjected to SEM-EDS analysis. The SEM-EDS analysis was performed by using Helios G4 HX made by Thermo Fisher Scientific Inc. under conditions of 3 kV and 0.8 nA.

### Evaluation 3: Initial Charge/Discharge Capacity and Efficiency

The rechargeable lithium battery cells according to the examples and the comparative examples were charged to an upper limit voltage of 4.3 V at a constant current of 0.2 C and to 0.05 C at the constant voltage and then discharged to a cut-off voltage of 3.0 V at 0.2 C at 25 °C for initial charge and discharge. In Table 1 below, initial charge capacity, initial discharge capacity, and a ratio of the latter to the former as efficiency are shown.

### Evaluation 4: High-temperature Cycle-life

After the initial charge and discharge of Evaluation 3, the cells were charged and discharged for 50 cycles or more at 1.0 C within a voltage range of 3.0 V to 4.4 V at 45 °C to calculate a ratio of 50^{th} cycle discharge capacity to the initial discharge capacity. The results are shown in Table 1 as high-temperature cycle-life.

### Evaluation 5: High-temperature Storage

After the initial charge and discharge of Evaluation 3, the cells were charged at 0.2 C to a voltage of 4.3 V and then stored at a high temperature of 75 °C for 14 days, and discharged at 0.2 C to a voltage of 3.0 V to measure a discharged capacity, and a ratio of the discharge capacity to the initial discharge capacity was calculated, which was provided as high-temperature storage in Table 1.

**Table 1**

| | Co (mol%) | Al (mol%) | Y (mol%) | Charge capacity (mAh/g) | Discharge capacity (mAh/g) | Efficiency (%) | High temp. cycle-life (%) | High temp. storage (%) |
|---|---|---|---|---|---|---|---|---|
| Ex. 1 | 2.0 | 0.5 | 0.1 | 248.5 | 221.1 | 89.0 | 96.4 | 85.7 |
| Ex. 2 | 2.0 | 0.5 | 0.2 | 247.7 | 219.9 | 88.8 | 97.0 | 87.4 |
| Comp. Ex. 1 | 2.0 | - | - | 247.5 | 219.0 | 88.5 | 92.7 | 74.3 |
| Comp. Ex. 2 | 3.0 | - | - | 246.3 | 218.2 | 88.6 | 94.0 | 77.9 |
| Comp. Ex. 3 | - | 0.5 | - | 246.5 | 214.9 | 87.2 | 93.1 | 69.5 |
| Comp. Ex. 4 | - | 1.0 | - | 244.8 | 211.7 | 86.5 | 94.9 | 73.1 |
| Comp. Ex. 5 | 2.0 | 0.5 | - | 247.2 | 217.8 | 88.1 | 95.3 | 75.8 |
| Comp. Ex. 6 | 3.0 | 1.0 | - | 246.6 | 218.0 | 88.4 | 95.7 | 80.5 |

Referring to Table 1, it can be seen that Examples 1 and 2 provide high initial charge/discharge capacity and initial charge/discharge efficiency and also excellent high-temperature cycle-life and high-temperature storage characteristics.

On the other hand, Comparative Examples 1 and 2, where aluminum and yttrium were not included in the coating layer, exhibited inferior high-temperature cycle-life and high-temperature storage characteristics. Comparative Examples 3 and 4, where cobalt and yttrium were not included in the coated layers, exhibited inferior initial discharge capacity, initial charge/discharge efficiency, high-temperature cycle-life, and high-temperature storage characteristics. Comparative Examples 5 and 6, where yttrium was not included in the coating layers, exhibited inferior high-temperature cycle-life and high-temperature storage characteristics.

While the present disclosure has been described in connection with what is presently considered to be practical example embodiments, it is to be understood that the present disclosure is not limited to the disclosed embodiments. Rather, the present disclosure includes various modifications and equivalent arrangements.

## Claims

1. A positive electrode active material comprising:
core particles in a form of secondary particles that are agglomerations of primary particles, the core particles including a lithium nickel-based composite oxide; and
a coating layer disposed on surfaces of the core particles, the coating layers including cobalt, aluminum, and yttrium.

2. The positive electrode active material as claimed in claim 1, wherein, based on 100 mol% of total metal in the positive electrode active material excluding lithium, the lithium nickel-based composite oxide has a nickel content of greater than or equal to 80 mol%.

3. The positive electrode active material as claimed in claim 1 or claim 2, wherein the lithium nickel-based composite oxide further comprises aluminum, and
wherein, based on 100 mol% of total metal in the lithium nickel-based composite oxide excluding lithium, an aluminum content is 1 mol% to 3 mol%.

4. The positive electrode active material as claimed in any one of claims 1 to 3, wherein the lithium nickel-based composite oxide is represented by:
Liₐ₁Niₓ₁M¹₁M²_{z1}O_{2-b1}X_{b1}
where 0.9≤a1≤1.8, 0.3≤x1≤1, 0≤y1≤0.7, 0≤z1≤0.7, 0.9≤x1+y1+z1≤1.1, 0≤b1≤0.1, M¹ and M² are different and are each one or more of Al, B, Ba, Ca, Ce, Co, Cr, Cu, Fe, Mg, Mn, Mo, Nb, Si, Sn, Sr, Ta, Ti, V, W, Y, Zn, and Zr, and X is one or more of F, P, and S.

5. The positive electrode active material as claimed in any one of claims 1 to 4, wherein, based on 100 mol% of total metal in the positive electrode active material excluding lithium, a cobalt content in the coating layer is 0.1 mol% to 5.0 mol%.

6. The positive electrode active material as claimed in any one of claims 1 to 5, wherein, based on 100 mol% of total metal in the positive electrode active material excluding lithium, an aluminum content in the coating layer is 0.1 mol% to 3.5 mol%.

7. The positive electrode active material as claimed in any one of claims 1 to 6, wherein, based on 100 mol% of total metal in the positive electrode active material excluding lithium, an yttrium content in the coating layer is 0.1 mol% to 0.5 mol%.

8. The positive electrode active material as claimed in any one of claims 1 to 7, wherein, based on 100 mol% of total metal in the positive electrode active material excluding lithium, a ratio of cobalt content to aluminum content in the positive electrode active material is 1.5 to 2.

9. The positive electrode active material as claimed in any one of claims 1 to 8, wherein
(a) the positive electrode active material further comprises a grain boundary coating portion on surfaces of the primary particles in internal portions of the secondary particles, with the grain boundary coating portion comprising cobalt and aluminum,
and/or
(b) the yttrium is in an island form in the coating layers.

10. The positive electrode active material as claimed in any one of claims 1 to 9, wherein an average particle diameter (D₅₀) of the positive electrode active material is 8 µm to 25 µm.

11. The positive electrode active material as claimed in any one of claims 1 to 10, wherein the positive electrode active material has a span value of 0.9 to 1.2 according to the equation: $Span = \left({D}_{90}-{D}_{10}\right) / {D}_{50}$ wherein, D₁₀ is a particle diameter of a particle with a cumulative volume of 10 vol% in a particle size distribution, D₅₀ is a particle diameter of a particle with a cumulative volume of 50 vol% in the particle size distribution, and D₉₀ is the particle diameter of a particle with a cumulative volume of 90 vol% in the particle size distribution.

12. The positive electrode active material as claimed in any one of claims 1 to 11, wherein a thickness of the coating layer is 5 nm to 200 nm.

13. A positive electrode comprising:
a current collector; and
a positive electrode active material layer on the current collector,
wherein the positive electrode active material layer comprises the positive electrode active material as claimed in any one of claims 1 to 12.

14. The positive electrode as claimed in claim 13, wherein
(a) a loading level of the positive electrode active material layer is 10 mg/cm² to 40 mg/cm²,
and/or
(b) a density of the positive electrode active material layer is 3.3 g/cc to 3.9 g/cc.

15. A rechargeable lithium battery comprising:
the positive electrode as claimed in claim 14 or claim 15;
a negative electrode; and
an electrolyte.
